Europäisches Patentamt

European Patent Office

Office européen des brevets

(11) Numéro de publication: **0 265 377**
**A2**

## DEMANDE DE BREVET EUROPEEN

(21) Numéro de dépôt: 87810566.7

(22) Date de dépôt: 02.10.87

(51) Int. Cl.⁴: **B 29 C 47/40**

(30) Priorité: 23.10.86 CH 4224/86

(43) Date de publication de la demande:
27.04.88 Bulletin 88/17

(84) Etats contractants désignés:
AT BE CH DE ES FR GB GR IT LI LU NL SE

(71) Demandeur: **Maillefer, Charles**
**Au Village**
**CH-1164 Buchillon (CH)**

(72) Inventeur: **Maillefer, Charles**
**Au Village**
**CH-1164 Buchillon (CH)**

(74) Mandataire: **Rochat, Daniel Jean et al**
**Bovard SA Ingénieurs-conseils ACP Optingenstrasse 16**
**CH-3000 Bern 25 (CH)**

(54) Extrudeuse multi-vis.

(57) La surface intérieure du cylindre (1) est divisée en une surface supérieure (2) en arc de cylindre et une surface inférieure (3) également en arc de cylindre. Ces deux surfaces se coupent de sorte que les deux segments de vis (8, 9) pourvus chacun d'un filet hélicoïdal (12, 13) engrènent mutuellement l'un dans l'autre. Les deux filets sont complémentaires en ce sens que la largeur du filet (12) augmente progressivement depuis l'ouverture d'entrée (6) vers l'aval, tandis que la largeur du filet (13) diminue progressivement depuis l'extrémité amont vers l'ouverture de sortie (7). Du fait des séparations entre les espaces libres, la matière qui est introduite dans l'extrudeuse par l'ouverture (6) est forcée de passer une fois dans une zone de travail afin de parvenir dans la chambre de sortie, où la pression est inférieure à celle de la chambre d'entrée.

FIG. 1

**Description**

Extrudeuse multi-vis

La présente invention a pour objet une extrudeuse multi-vis comprenant au moins un segment d'extrudeuse formé d'un cylindre avec une première forure, une second forure, un passage d'alimentation et un passage d'extraction, d'une première vis et d'une seconde vis, et dans lequel les forures sont en communication latérale l'une avec l'autre et présentent des surfaces internes ayant deux arêtes communes, et les vis, logées dans les dites forures, présentent des filets en engrènement mutuel, délimitant avec les dites faces internes des espaces libres contenant de la matière à extruder, et des zones de travail dans lesquelles la matière à extruder est soumise à un effort de cisaillement.

On sait que les extrudeuses multi-vis sont utilisées lorsque la matière à extruder est d'une constitution telle que l'effet de poussée résultant du frottement contre la face intérieure du cylindre, essentiel dans les extrudeuses à disposition mono-vis, ne se produit pas ou seulement dans une mesure insuffisante. Ainsi, on utilise de préférence des extrudeuses multi-vis lorsque la matière à extruder se trouve initialement sous forme de poudre, notamment lorsque le coefficient de frottement des particules de cette poudre contre la face interne du cylindre est faible, ou lorsque la matière à tendance à adhérer aux parois. Dans ce cas, la disposition multi-vis produit, du fait de l'engrènement mutuel des filets des différentes vis, un refoulement forcé de la matière vers l'aval. Toutefois, le défaut principal des extrudeuses multi-vis est que le travail de la matière ne se fait pas de façon homogène.

Le fascicule de demande de brevet allemand DOS 1,504,449 décrit une extrudeuse multi-vis dans laquelle deux segments de vis en engrènement mutuel comportent des filets de pas constants mais ayant des profils complémentaires et progressivement variables. L'un des segments de vis a un filet dont la largeur augmente vers l'aval, tandis que l'autre a un filet dont la largeur décroit. Dans cette réalisation connue, les deux vis jouent des rôles différents. La matière n'est véhiculée que dans les espaces libres situés entre le cylindre et le filet, dont la largeur augmente vers l'aval. Elle est déplacée en restant dans ces espaces libres et de ce fait subit une compression progressive durant son transfert vers l'aval. Il n'y a pas ou peu de malaxage.

Dans la plupart des extrudeuses multi-vis connues, les espaces libres associés aux filets des vis jouent des rôles parallèles, mais le défaut d'homogénéité indiqué plus haut existe aussi. On reviendra plus loin sur cette question.

Le but de la présente invention est de créer une extrudeuse multi-vis du genre mentionné au début qui assure un traitement homogène de la matière.

Dans ce but, l'extrudeuse selon l'invention est caractérisée en ce que le passage d'alimentation est en communication avec la première forure et le passage d'extraction avec la seconde forure, et en ce que des moyens sont prévus pour que la matière contenue dans les espaces libres de la première vis soit à une pression supérieure à celle de la matière contenue dans les espaces libres de la seconde vis.

On va décrire ci-après, à titre d'exemple, une forme d'exécution de l'objet de l'invention en se référant au dessin, dont

la fig. 1 est une vue en coupe longitudinale, schématique, d'une partie d'une extrudeuse double-vis, et

la fig. 2 est une vue en coupe selon la ligne II-II de la fig. 1.

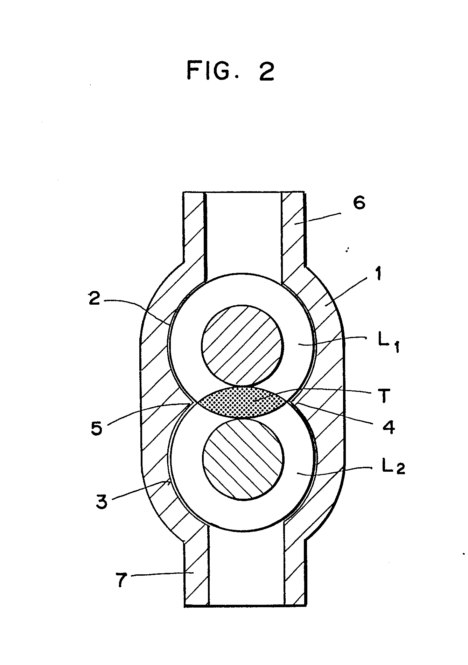

Avant de décrire le segment d'extrudeuse double-vis représenté au dessin, on expliquera, en se basant sur la fig. 2 qui peut représenter une extrudeuse dont les filets des vis ont une section constante, le travail de la matière plastique tandis qu'elle est entraînée dans le sens axial.

Si l'on considère une coupe à travers une extrudeuse à deux vis ayant des filets complémentaires (v. fig. 2 ci-après), on distingue les espaces libres L1 et L2, et les zones de cisaillement T. Les espaces libres forment des chambres de déplacement dont le volume dans le cas général est constant ou variable. La matière est contenue dans ces espaces libres limités entre le ou les filets d'une vis et la face intérieure de l'une ou l'autre des forures du cylindre, et elle est déplacée vers l'aval. Dans les zones de cisaillement T au contraire, la matière est serrée soit entre les flancs des filets qui sont en engrènement mutuel, soit entre la surface sommitale d'un filet de l'une ou de l'autre des deux vis et la surface du noyau de la vis antagoniste. Une disposition double vis délimite donc trois zones de travail différentes entre chaque espace libre d'une vis et l'espace libre voisin, de l'autre vis. Au cours de la rotation, les espaces libres décrivent un mouvement de déplacement axial fictif vers l'aval, assurant le déplacement réel de la matière dans cette direction. A chaque tour de vis, une partie de la matière est entraînée dans une zone de travail, tandis que le reste de la matière est déplacée vers l'aval en restant dans l'espace libre qu'elle occupe. La matière qui vient de passer dans une zone de travail pénètre dans un nouvel espace libre et se mélange plus ou moins progressivement avec le reste de la matière contenue dans cet espace. Après quelques tours, certaines parties de la matière ont ainsi passé plusieurs fois dans une zone de travail, tandis que certaines autres parties n'y ont pas passé du tout.

Il est reconnu que la matière qui passe dans une zone de travail subit un fort cisaillement ce qui est favorable à son échauffement et au mélange. Par contre, les particules qui restent dans leur espace libre sont transportées vers l'aval sans être soumises à un traitement actif. Le résultat est que ces particules sont mal travaillées.

Ainsi, certaines particules peuvent passer plusieurs fois, par les lois du hasard, dans une zone de travail. D'autres jamais. A la limite on peut obtenir des particules brûlées ou dégradées par un travail trop intense et d'autres encore "crues" ou non travaillées. La matière est ainsi inhomogène à la sortie de la machine.

Admettons par exemple qu'à chaque tour de vis 5% de la matière passe dans une zone de travail. Après deux tours de vis, le calcul montre que 90,25% de la matière n'aura pas passé, 9,5% aura passé une fois et 0,25% aura passé deux fois dans une zone de travail. L'analyse combinatoire permet de calculer quelles parties, après n de tour vis n'auront toujours jamais passé dans une zone de travail, auront passé une fois, x fois, etc., la partie ayant passé n fois étant égale à $r^n$ si r est la proportion de passage de la matière d'entrée dans une zone de travail à chaque tour. Il serait souhaitable que toutes les parties aient passé le même nombre de fois, de préférence une fois dans une zone de travail pour que le résultat final soit homogène.

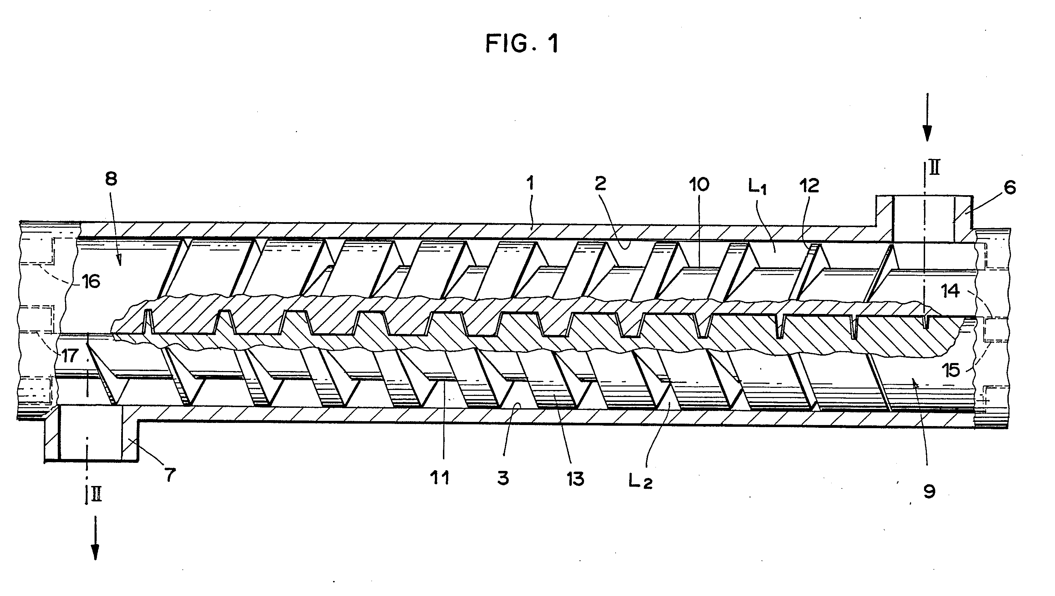

L'extrudeuse double-vis représentée à tire d'exemple au dessin assure cette condition. Elle comporte un cylindre 1 comportant deux forures parallèles dont les faces intérieures 2 et 3 délimitent une chambre supérieure et une chambre inférieure. Cependant la disposition selon un plan vertical représentée au dessin n'est pas critique. Les deux chambres pourraient aussi se trouver au même niveau. Les surfaces 2 et 3 sont des portions de cylindre avec des axes parallèles et se coupent selon deux génératrices communes 4 et 5 parallèles et symétriques par rapport à un plan contenant les axes des deux forures. Les chambres de déplacement sont désignées par L1 et L2 (fig. 2). La chambre supérieure qui joue le rôle de chambre d'entrée est raccordée à l'extrémité droite du cylindre 1 à une tubulure d'alimention 6 qui peut être raccodée par exemple à une trémie, tandis que la chambre inférieure L2 est raccordée à l'extrémité gauche de l'extrudeuse (fig. 1) à une tubulure d'extraction 7 par laquelle la matière sera conduite vers un autre segment de l'extrudeuse ou vers une tête d'extrusion. Le cylindre 1 du segment d'extrudeuse décrit contient deux vis parallèles 8 et 9 qui, dans la forme d'exécution décrite ici, présentent les caractéristiques suivantes: les deux vis ont chacune un noyau cylindrique 10, 11, dont fait saillie un filet hélicoïdal 12, 13. Ces deux filets sont de même diamètre et de même pas et sont ajustés de façon que chacune des vis 8 et 9 puisse tourner dans l'une des chambres L1, L2. Le filet 12 a la particularité d'avoir une largeur qui augmente progressivement vers l'avail depuis la tubulure d'ali mentation 6, tandis que le filet 13 est complémentaire du filet 12, c'est-à-dire que sa largeur, qui est pratiquement égale au pas à l'extrémité amont de l'extrudeuse, décroît progressivement vers l'aval et vers la tubulure d'traction 7. Ainsi la chambre supérieure L1 est un canal d'entrée qui se développe selon un chemin hélicoïdal vers l'aval et dont la section se réduit progressivement, tandis que la chambre L2 est un canal de sortie, dont la section croît progressivement. A chaque spire, les filets 12 et 13 engrènent l'un dans l'autre avec des jeux qui seront réglés selon les connaissances de l'homme du métier en fonction d'essais, et suivant les caractéristiques de l'extrudeuse, ses conditions d'emploi et la matière à travailler. Les zones d'engrènement des filets 12, 13, délimitent des zones de travail T et divisent les chambres L1 et L2 en deux séries d'espaces libres ayant la forme de croissants.

Les diamètres des tubulures 6 et 7 sont inférieurs à ceux des chambres L1 et L2 de sorte que chacune de ces tubulures est raccordée exclusivement à une des chambres. D'autre part, à l'amont de la tubulure 6 et à l'aval de la tubulure 7, la partie d'extrudeuse représentée est agencée de manière à fermer les chambres L1 et L2. Ainsi, les noyaux 10 et 11 des vis 8 et 9 comportent des prolongements amont et aval qui traversent des dispositifs d'étanchéité 14, 15, 16, 17, et ferment les chambres L1 et L2 par rapport à l'extérieur de l'extrudeuse, ou à un autre segment d'extrudeuse (non représenté), dans lequel les conditions de fonctionnement peuvent être différentes.

Ainsi le débit de matière qui entre dans l'extrudeuse par la tubulure 6 sera tout d'abord entièrement contenu dans le canal d'entrée L1. Cependant, du fait du rétrécissement progressif de ce canal et de l'effet de transport, chaque espace libre se déplace en produisant un effet de compression qui oblige la matière à passer progressivement dans les jeux des zones de travail T pour parvenir dans la chambre de sortie L2. La matière qui a passé dans une zone de travail parvient dans un espace libre de la vis 9, dont le volume croît progressivement vers la tubulure 7. En service, du fait que l'engrènement des filets produit les zones de travail T, la pression dans la chambre L2 sera inférieure à celle de la chambre L1. En conséquence, toute la matière aura passé une fois et une seule fois dans une zone de travail T au cours du déplacement de l'espace libre dans lequel elle est contenue de l'amont vers l'avail.

Le segment d'extrudeuse décrit peut être précédé d'un segment d'alimentation dans lequel la matière est amenée au voisinage de son point de ramollissement, de sorte que le phénomène de mise en fusion s'effectue progressivement dans le segment d'extrudeuse décrit par apport de chaleur dû au frottement interne dans les zones de travail. De même, le segment d'extrudeuse décrit pourrait également être suivi d'une zone de dosage, de mélange, ou de tout autre segment d'extrudeuse.

L'entraînement des vis 8 et 9 n'a pas été représenté. Ces vis seront supportées par des paliers et accouplées à des poulies ou des trains d'engrenage, eux-même actionnés par des moyens connus, les deux vis étant entraînées positivement.

La disposition décrite s'applique non seulement aux extrudeuses double-vis, mais de façon générale à toute extrudese multi-vis. Au lieu que la variation du volume des espaces libres dans la chambre d'entrée et dans la chambre de sortie soit obtenue par une modi fiction de la largeur des filets, ces derniers ayant un diamètre, un pas et une hauteur constants sur la longueur de la vis, comme représenté au dessin, la modification progressive du volume des espaces libres peut aussi être obtenue par variation du diamètre du noyau de la ris or par variation du diamètre des chambres d'entrée et de sortie. La modification peut également se produire en modifiant progressivement le pas des filets ou toute autre caractéristique constructive. L'agencement des zones de travail T peut également différer de ce que représente schématiquement la fig. 2. Il n'est pas nécessaire que les filets des deux vis engrènent mutuellement l'un dans l'autre sur toute leur hauteur. Le cas échéant, le maintien à chaque spire d'une seule zone de travail entre les sommets situés en regard l'un de l'autre de deux filets correspondants appartenant chacun à une des vis permettrait d'atteindre le résultat visé.

Avec la disposition décrite, les conditions thermiques dans le canal d'entrée sont différentes de celles dans le canal de sortie. Il est possible d'équiper le cylindre soit de moyens d'isolation thermique, soit de moyens de chauffage ou de refroidissement, ces derniers étant noyés dans le cylindre, au voisinage des faces internes des forures.

**Revendications**

1. Extrudeuse multi-vis comprenant au moins un segment d'extrudeuse formé d'un cylindre avec une première forure, une seconde forure, un passage d'alimentation et un passage d'extraction, d'une première vis et d'une seconde vis, et dans lequel les forures sont en communication latérale l'une avec l'autre et présentent des surfaces internes ayant deux arêtes communes, et les vis, logées dans les dites forures, présentent des filets en engrènement mutuel, délimitant avec les dites faces internes des espaces libres contenant de la matière à extruder, et des zones de travail dans lesquelles la matière à extruder est soumise à un effort de cisaillement, caractérisée en ce que le passage d'alimentation est en communication avec la premièree forure et le passage d'extraction avec la sconde forure, et en ce que des moyens sont prévus pour que la matière contenue dans les espaces libres de la première vis soit à une pression supérieure à celle de la matière contenue dans les espaces libres de la seconde vis.

2. Extrudeuse selon la revendication 1, caractérisée en ce que les filets des deux vis sont des filets hélicoïdaux complémentaires ayant des profils qui varient dans la longueur de la vis, de manière que les dits espaces libres aient des volumes variant progressivement.

3. Extrudeuse selon la revendication 2, caractérisée en ce que la première vis comporte un agencement de filets qui délimite avec la surface intérieure de la première forure un canal d'entrée dont la section décroît dans le sens de l'avance de la matière, tandis que la seconde vis comporte un agencement de filets qui délimite avec la face intérieure de la seconde forure un canal de sortie dont la section croît dans le sens de l'avance de la matière.

4. Extrudeuse selon la revendication 3, caractérisée en ce que des dispositifs d'étanchéité séparés sont prévus entre les vis et le cylindre d'une part à l'amont du passage d'alimentation et d'autre part à l'aval du passage d'extraction.

5. Extrudeuse selon la revendication 2, caractérisée en ce que la variation des volumes des dits espaces libres est obtenue par variation de la hauteur, de la largeur, du diamètre, et/ou du pas du ou des filets.

0265377

FIG. 1

0265377

FIG. 2